# EUROPÄISCHE PATENTSCHRIFT

(11) **EP 2 232 983 B1**
(45) Veröffentlichungstag und Bekanntmachung des Hinweises auf die Patenterteilung: **20.06.2012**
(21) Anmeldenummer: 10156450.8
(22) Anmeldetag: 13.03.2010
(51) Int. Cl.: A01G 13/02

(54) **Verbindungselement zur Firstfixierung eines dachförmigen Flächengebildes**
Connecting element for the ridge fixing of a roof-shaped sheet-like material
Elément de connexion pour la fixation de faîte d'une structure plate en forme de toit

(30) Priorität: 16.03.2009 DE 102009013052
(43) Veröffentlichungstag der Anmeldung: 29.09.2010
(73) Patentinhaber: BayWa Aktiengesellschaft, 81925 München (DE)
(72) Erfinder: Holzwarth, Rudolf, 88255 Baindt (DE)
(74) Vertreter: Pfiz, Thomas

(56) Entgegenhaltungen:
- AT-B- 404 856
- DE-B3-102006 002 874
- FR-A1- 2 278 246

## Beschreibung

Die Erfindung betrifft ein Verbindungselement zur Firstfixierung eines dachförmigen Flächengebildes, insbesondere einer Wetterschutzüberdachung für Pflanzenkulturen, mit einem auf ein Segment eines Firstdrahts aufsteckbaren, eine vom Firstdraht axial durchsetzte Drahtführung aufweisenden Unterteil und einem unter Zwischenklemmen des insbesondere aus Folien-oder Netzbahnen gebildeten flexiblen Flächengebildes auf das Unterteil aufsetzbaren Oberteil. Die Erfindung betrifft weiter eine Wetterschutzüberdachung für Pflanzenkulturen mit solchen Verbindungselementen.

Eine gattungsgemäße Vorrichtung ist aus der DE10252468 bekannt. Dort ist ein hülsenförmiges Innenteil vorgesehen, welches den Firstdraht ummantelt und mit einem Außenteil zum bereichsweisen Einklemmen eines Schutznetzes zusammenwirkt. Zusätzlich zu der nur punktuellen Fixierung ist das Gewebe über eine unter dem Innenteil verlaufende Firstnaht am Firstdraht gesichert. Durch die Ausgestaltung der Netzverbinder und die Anordnung der Firstnaht ist das Netz im Bereich der Bindestellen hohen Belastungen unterworfen. Insbesondere wird die Breite der Netzbahnen verkürzt, und die Schussfäden laufen unter einem geringen Radius von der Firstnaht ab.

Ausgehend hiervon liegt der Erfindung die Aufgabe zugrunde, die im Stand der Technik bekannten Vorrichtungen weiter zu verbessern und so zu gestalten, dass mit einer einfach montierbaren Konstruktion eine standfeste Netzfixierung erreichbar ist.

Zur Lösung dieser Aufgabe wird die im Patentanspruch 1 bzw. 12 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Netz- bzw. Folienbahn an der Firstverbindungsstelle möglichst belastungsfrei zu lagern. Dementsprechend wird erfindungsgemäß vorgeschlagen, dass das Unterteil eine beidseitig von der Drahtführung flügelartig abstehende Stützstruktur für eine flächige Unterstützung des Flächengebildes aufweist. Auf diese Weise ist es möglich, punktuelle Spannungen zu vermeiden und die Anordnung bzw. den Flächenverlauf im Firstbereich nicht dadurch zu beeinflussen, dass die Netz- oder Folienbahn stellenweise verkürzt wird.

Vorteilhafterweise bildet die von dem Firstdraht weg dachförmig abstehende Stützstruktur eine mit einer Horizontalebene einen spitzen Dachneigungswinkel einschließende Stützfläche für das Flächengebilde. Besonders günstig ist es, wenn der Dachneigungswinkel im Bereich zwischen 10° und 50°, vorzugsweise zwischen 20° und 30° liegt.

Eine weitere vorteilhafte Ausführung sieht vor, dass die nutartig ausgebildete Drahtführung sich über mehr als die Hälfte des oberen Drahtumfangs erstreckt und einen im Montagezustand nach unten weisenden seitlichen Einführschlitz zum Einführen des Firstdrahts aufweist. Dadurch wird eine sichere Halterung und zugleich eine einfache Steckmontage ermöglicht. Eine weitere Verbesserung in dieser Hinsicht ergibt sich dadurch, dass die im Querschnitt C-förmig ausgebildete Drahtführung zum seitlichen Einführen des Firstdrahts elastisch aufspreizbar ist.

Um eine zuverlässige Fixierung und formerhaltende Aussteifung zu ermöglichen, ist es vorteilhaft, wenn das Oberteil im Bereich einer Klemmfläche für das Flächengebilde formschlüssig mit der Stützstruktur des Unterteils zusammensetzbar ist. Vorteilhaft ist es auch, wenn das Oberteil und das Unterteil über mindestens einen seitlich von der Drahtführung verlaufenden und im Montagezustand das Flächengebilde durchsetzenden gemeinsamen Schraubkanal mittels einer Schraube verbindbar sind. Grundsätzlich reicht dabei eine einzelne Schraubverbindung, während der weitere Schraubkanal als Reserve beispielsweise im Falle eines Montagedefekts genutzt werden kann.

Um die Montage zu erleichtern, kann der Schraubkanal einen am Oberteil oder Unterteil abstehenden, durch das Flächengebilde durchsteckbaren Steckzapfen aufweisen.

Für eine zuverlässige Klemmverbindung ist es auch von Vorteil, wenn das Unterteil beidseitig von der Drahtführung mit einer rinnenförmigen Vertiefung oder rippenförmigen Erhöhung für einen formkomplementären Eingriff des Oberteils versehen ist.

Vorteilhafterweise sind das Ober- und Unterteil als Formteil, insbesondere als Spritzgussteil ausgebildet und durch eine angeformte Rippenstruktur stabilisiert.

Eine vorteilhafte Weiterbildung sieht ein vorzugsweise rasterförmig gelochtes Einhängeband zum Raffen des Flächengebildes vor, wobei sich das Einhängeband zumindest an einem Ende lösbar an dem Oberteil einhängen lässt.

Gegenstand der Erfindung ist auch eine Wetterschutzüberdachung für Pflanzenkulturen mit einem aus Folien-oder Netzbahnen gebildeten dachförmigen Flächengebilde, einer Tragkonstruktion für das Flächengebilde und einer Vielzahl von an Firstdrähten der Tragkonstruktion verteilt angeordneten Verbindungselementen, welche jeweils aus einem auf ein Drahtsegment aufsteckbaren, eine vom Firstdraht axial durchsetzte Drahtführung aufweisenden Unterteil und einem unter Zwischenklemmen des insbesondere aus Folien- oder Netzbahnen gebildeten flexiblen Flächengebildes auf das Unterteil aufsetzbaren Oberteil zusammengesetzt sind, wobei das Unterteil eine beidseitig von seiner Hüllpartie flügelartig abstehende Stützstruktur für eine flächige Unterstützung des Flächengebildes aufweist.

Im Folgenden wird die Erfindung anhand eines in der Zeichnung in schematischer Weise dargestellten Ausführungsbeispiels näher erläutert. Es zeigen
- Fig. 1 und 2: ein Wetterschutznetz für Pflanzenkultu- ren mit Verbindungselementen zur Firstfixie- rung im ausgebreiteten und gerafften Zustand in schaubildlicher Darstellung;
- Fig. 3: ein Verbindungselement für das Wetterschutz- netz in einem Schnitt quer zum Firstdraht;
- Fig. 4: das Verbindungselement in perspektivischer An- sicht.

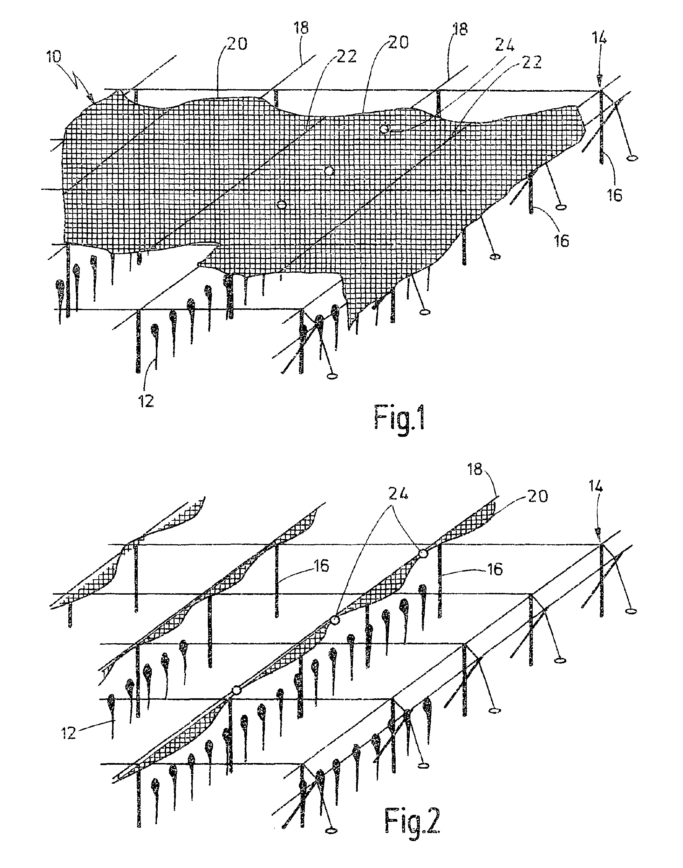

Die in Fig. 1 und 2 gezeigte Wetterschutzüberdachung 10 lässt sich über reihenförmig angeordneten Pflanzenkulturen 12 aufspannen, um während der Vegetationsperiode beispielsweise Hagelschäden zu verhindern, während im Winterbetrieb gemäß Fig. 2 ein Hochraffen möglich ist. Die Überdachung 10 umfasst eine Tragkonstruktion 14 mit auf Pfosten 16 parallel zueinander gespannten Firstdrähten 18, auf welche flexible Folien- oder Netzbahnen 20 aufgelegt sind, die an ihren Längsrändern 22 in dachförmiger Anordnung miteinander verbindbar sind. Zur punktuellen Firstfixierung der Netzbahnen 20 sind Verbindungselemente 24 vorgesehen, die an Bindestellen längs der Firstdrähte 18 verteilt angeordnet sind, wie dies in Fig. 1 und 2 nur für eine Reihe symbolisiert ist.

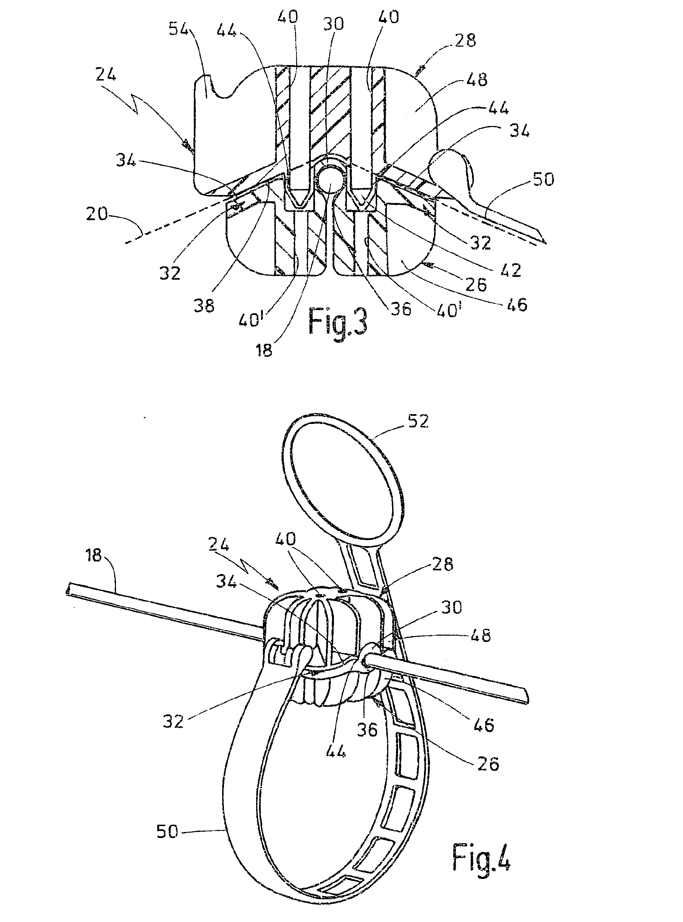

Fig. 3 zeigt ein Verbindungselement 24 in einem Schnitt quer zum Firstdraht 18. Gezeigt ist der Montagezustand entsprechend Fig. 1 bei dachförmig aufgespanntem Netz 20. Das Verbindungselement 24 weist ein an beliebiger Stelle auf ein Segment des Firstdrahts 18 aufsteckbares Unterteil 26 und ein unter Zwischenklemmen eines Gewebebereichs des Netzes 20 auf das Unterteil 26 aufsetzbares Oberteil 28 auf. Die beiden Formteile 26, 28 sind im Spritzgussverfahren jeweils einstückig gefertigt.

Das Unterteil 26 weist eine Drahtführung 30 und eine beidseitig von der Drahtführung flügelartig seitlich nach außen abstehende Stützstruktur 32 für eine flächige Unterstützung des Netzes 20 auf. Die Stützstruktur 32 bildet dabei eine von dem Firstdraht 18 dachförmig abstehende ebene Stützfläche 34, die mit einer Horizontalebene einen spitzen Dachneigungswinkel einschließt. In dem gezeigten Beispiel beträgt der Dachneigungswinkel etwa 25°. Auf diese Weise wird der Netzablaufwinkel nachgebildet, der sich aufgrund der Breite der Netzbahnen 20 und der Trauftiefe an deren Längsrändern ergibt.

Zweckmäßig wird die Drahtführung 30 durch eine C-förmige Nut gebildet, die mehr als die Hälfte des oberen Drahtumfangs umgreift und einen nach unten weisenden Einführschlitz 36 zum seitlichen Aufstecken auf den Firstdraht 18 aufweist. Zu diesem Zweck sind die beiden durch den Einführschlitz 36 getrennten Hälften des Unterteils 26 elastisch aufspreizbar.

Das Oberteil 28 ist im Bereich einer der Stützfläche 34 zugewandten Klemmfläche 38 formkomplementär zu dem Unterteil 26 ausgebildet, so dass ein formschlüssiges Zusammensetzen der beiden Teile 24, 26 möglich ist.

Zur Sicherung des Verbindungszustandes sind zwei seitlich von der Drahtführung 30 verlaufende und das Netz 20 quer durchsetzende Schraubkanäle 40, 40' in dem Ober- und Unterteil vorgesehen. Um das Zusammenfügen zu erleichtern, sind die Schraubkanäle 40 an dem Oberteil 28 durch einen abstehenden Steckzapfen 42 verlängert, der in einen entsprechend erweiterten Bohrungsansatz des Unterteils 26 eingreift. Die auf das Netz 20 wirkende Klemmkraft wird dadurch erhöht, dass das Unterteil 26 zwei seitlich neben der Drahtführung verlaufende rinnenförmige Vertiefungen 44 für einen formkomplementären Eingriff des Oberteils 28 aufweist.

Wie auch aus Fig. 4 erkennbar, sorgt eine Rippenstruktur 46 bzw. 48 an dem Unter- und Oberteil für eine zusätzliche Aussteifung, um die über das Netz 20 eingetragenen Kräfte aufzunehmen. Ein Rasterband 50 ermöglicht das Hochraffen des Netzes 20 im Winterbetrieb, wie es in Fig. 2 gezeigt ist. Das Rasterband 50 ist an einem Ende am Oberteil 28 eingeclipst, während sich der mit einer Grifföse versehene andere Endabschnitt 52 mit der gewünschten Rasteröffnung an einem Haken 54 des Oberteils 28 einhängen lässt. Durch einfaches Anheben der durch das Rasterband 50 gebildeten Schlaufe kann die Verbindung auch wieder ohne aufwändige Handhabung gelöst werden.

## Patentansprüche

1. Verbindungselement zur Firstfixierung eines dachförmigen Flächengebildes (20), insbesondere einer Wetterschutzüberdachung (10) für Pflanzenkulturen (12), mit einem auf ein Segment eines Firstdrahts (18) aufsteckbaren, eine vom Firstdraht (18) axial durchsetzte Drahtführung (30) aufweisenden Unterteil (26) und einem unter Zwischenklemmen des insbesondere aus Folien- oder Netzbahnen gebildeten flexiblen Flächengebildes (20) auf das Unterteil (26) aufsetzbaren Oberteil (28), **dadurch gekennzeichnet, dass** das Unterteil (26) eine beidseitig von der Drahtführung (30) flügelartig abstehende Stützstruktur (32) für eine flächige Unterstützung des Flächengebildes (20) aufweist.

2. Verbindungselement nach Anspruch 1, **dadurch gekennzeichnet, dass** die von dem Firstdraht (18) weg dachförmig abstehende Stützstruktur (32) eine mit einer Horizontalebene einen spitzen Dachneigungswinkel einschließende Stützfläche (34) für das Flächengebilde (20) bildet.

3. Verbindungselement nach Anspruch 2, **dadurch gekennzeichnet, dass** der Dachneigungswinkel im Bereich zwischen 10° und 50°, vorzugsweise zwischen 20° und 30° liegt.

4. Verbindungselement nach einem der Ansprüche 1 bis 3, **dadurch gekennzeichnet, dass** die nutartig ausgebildete Drahtführung (30) sich über mehr als die Hälfte des oberen Drahtumfangs erstreckt und einen im Montagezustand nach unten weisenden seitlichen Einführschlitz (36) zum Einführen des Firstdrahts (18) aufweist.

5. Verbindungselement nach einem der Ansprüche 1 bis 4, **dadurch gekennzeichnet, dass** die im Querschnitt C-förmig ausgebildete Drahtführung (30) zum seitlichen Einführen des Firstdrahts (18) elastisch aufspreizbar ist.

6. Verbindungselement nach einem der Ansprüche 1 bis 5, **dadurch gekennzeichnet, dass** das Oberteil (28) im Bereich einer Klemmfläche (38) für das Flächengebilde (20) formschlüssig mit der Stützstruktur (32) des Unterteils (26) zusammensetzbar ist.

7. Verbindungselement nach einem der Ansprüche 1 bis 6, **dadurch gekennzeichnet, dass** das Oberteil (28) und das Unterteil (26) über mindestens einen seitlich von der Drahtführung (30) verlaufenden und im Montagezustand das Flächengebilde (20) durchsetzenden gemeinsamen Schraubkanal (40,40') mittels einer Schraube verbindbar sind.

8. Verbindungselement nach Anspruch 7, **dadurch gekennzeichnet, dass** der Schraubkanal (40,40') einen am Oberteil (28) oder Unterteil (26) abstehenden, durch das Flächengebilde (20) durchsteckbaren Steckzapfen (42) aufweist.

9. Verbindungselement nach einem der Ansprüche 1 bis 8, **dadurch gekennzeichnet, dass** das Unterteil (26) beidseitig von der Drahtführung (30) mit einer rinnenförmigen Vertiefung (44) oder rippenförmigen Erhöhung für einen formkomplementären Eingriff des Oberteils (28) versehen ist.

10. Verbindungselement nach einem der Ansprüche 1 bis 9, **dadurch gekennzeichnet, dass** das Ober- und Unterteil (26,28) als Formteil, insbesondere als Spritzgussteil ausgebildet und durch eine angeformte Rippenstruktur stabilisiert sind.

11. Verbindungselement nach einem der Ansprüche 1 bis 10, **gekennzeichnet durch** ein vorzugsweise rasterförmig gelochtes Einhängeband (50) zum Raffen des Flächengebildes (20), wobei sich das Einhängeband (50) zumindest an einem Ende (52) lösbar an dem Oberteil (28) einhängen lässt.

12. Wetterschutzüberdachung für Pflanzenkulturen (12) mit einem aus Folien- oder Netzbahnen gebildeten dachförmigen Flächengebilde (20), einer Tragkonstruktion (14) für das Flächengebilde (20) und einer Vielzahl von an Firstdrähten (18) der Tragkonstruktion (14) verteilt angeordneten Verbindungselementen (24), welche jeweils aus einem auf ein Drahtsegment aufsteckbaren, eine vom Firstdraht (18) axial durchsetzte Drahtführung (30) aufweisenden Unterteil (26) und einem unter Zwischenklemmen des insbesondere aus Folien- oder Netzbahnen gebildeten flexiblen Flächengebildes (20) auf das Unterteil (26) aufsetzbaren Oberteil (28) zusammengesetzt sind, **dadurch gekennzeichnet, dass** das Unterteil (26) eine beidseitig von der Drahtführung (30) flügelartig abstehende Stützstruktur (32) für eine flächige Unterstützung des Flächengebildes (20) aufweist.

## Claims

1. Connecting element for the ridge fixing of a roof-shaped sheet-like material (20), in particular a weather protection canopy (10) for crops (12), comprising a lower part (26) which can be plugged onto a segment of a ridge wire (18) and which has a wire guide (30) through which the ridge wire (18) passes axially, and comprising an upper part (28) which can be placed on the lower part (26) while clamping therebetween the flexible sheet-like material (20), which is particularly formed of film sheets or netting sheets, **characterized in that** the lower part (26) has a supporting structure (32) which projects with wing-like projections on both sides of the wire guide (30) and is intended to provide the sheet-like material (20) with a flat support from below.

2. Connecting element according to Claim 1, **characterized in that** the supporting structure (32), which projects away from the ridge wire (18) in the shape of a roof, forms a support face (34) for the sheet-like material (20) that encloses an acute roof inclination angle with a horizontal plane.

3. Connecting element according to Claim 2, **characterized in that** the roof inclination angle lies in the range between 10° and 50°, preferably between 20° and 30°.

4. Connecting element according to one of Claims 1 to 3, **characterized in that** the groove-shaped wire guide (30) extends over more than half the upper wire circumference and has a lateral insertion slit (36), which is directed downwardly in the installed state, for inserting the ridge wire (18).

5. Connecting element according to one of Claims 1 to 4, **characterized in that** the wire guide (30) of C-shaped cross section can be spread open elastically in order to laterally insert the ridge wire (18).

6. Connecting element according to one of Claims 1 to 5, **characterized in that**, in the region of a clamping face (38) for the sheet-like material (20), the upper part (28) can be assembled in an interlocking manner with the supporting structure (32) of the lower part (26).

7. Connecting element according to one of Claims 1 to 6, **characterized in that** the upper part (28) and the lower part (26) can be connected by means of a screw via at least one common screw-connection channel (40, 40') which extends laterally from the wire guide (30) and, in the installed state, passes through the sheet-like material (20).

8. Connecting element according to Claim 7, **characterized in that** the screw-connection channel (40, 40') comprises a spigot (42) which projects from the upper part (28) or lower part (26) and which can be plugged through the sheet-like material (20).

9. Connecting element according to one of Claims 1 to 8, **characterized in that** the lower part (26) is provided, on both sides of the wire guide (30), with a slot-like depression (44) or rib-like elevation for engaging the upper part (28) using shape complementarity.

10. Connecting element according to one of Claims 1 to 9, **characterized in that** the upper and lower part (26, 28) take the form of mouldings, in particular injection mouldings, and are stabilized by means of an integrally formed rib structure.

11. Connecting element according to one of Claims 1 to 10, **characterized by** a suspension strap (50), preferably having a perforated grid pattern, for gathering the sheet-like material (20), wherein the suspension strap (50) can be releasably suspended on the upper part (28), at least at one end (52).

12. Weather protection canopy for crops (12) comprising a roof-shaped sheet-like material (20) formed of film sheets or netting sheets, a support construction (14) for the sheet-like material (20), and a multiplicity of connecting elements (24) arranged in a distributed manner on ridge wires (18) of the support construction (14), which connecting elements are each composed of a lower part (26) which can be plugged onto a wire segment and which has a wire guide (30) through which the ridge wire (18) passes axially, and of an upper part (28) which can be placed on the lower part (26) while clamping therebetween the flexible sheet-like material (20), which is particularly formed of film sheets or netting sheets, **characterized in that** the lower part (26) has a supporting structure (32) which projects with wing-like projections on both sides of the wire guide (30) and is intended to provide the sheet-like material (20) with a flat support from below.

## Revendications

1. Elément de connexion pour la fixation de faîte d'une structure plate en forme de toit (20), en particulier d'une toiture (10) de protection contre les intempéries pour des cultures de plantes (12), avec une partie inférieure (26) apte à s'accrocher sur un segment d'un fil de faîte (18) et présentant un guidage de fil (30) traversé axialement par le fil de faîte (18), et avec une partie supérieure (28) apte à se poser sur la partie inférieure (26) avec interposition par serrage de la structure plate flexible (20) formée en particulier de bandes de toile ou de filet, **caractérisé en ce que** la partie inférieure (26) présente une structure d'appui (32) saillante en forme d'ailes de part et d'autre du guidage de fil (30) pour un soutien à plat de la structure plate (20).

2. Elément de connexion selon la revendication 1, **caractérisé en ce que** la structure d'appui (32) saillante en forme de toit en s'écartant du fil de faîte (18) forme une face d'appui (34), qui forme un angle aigu d'inclinaison de toit par rapport à un plan horizontal, pour la structure plate (20).

3. Elément de connexion selon la revendication 2, **caractérisé en ce que** l'angle d'inclinaison de toit se situe dans la plage comprise entre 10° et 50°, de préférence entre 20° et 30°.

4. Elément de connexion selon l'une quelconque des revendications 1 à 3, **caractérisé en ce que** le guidage de fil (30) réalisé à la manière d'une rainure s'étend sur plus de la moitié de la périphérie supérieure du fil et présente une fente d'insertion latérale (36), orientée vers le bas en position montée, pour l'insertion du fil de faîte (18).

5. Elément de connexion selon l'une quelconque des revendications 1 à 4, **caractérisé en ce que** le guidage de fil (30) réalisé en forme de C en section transversale est apte à s'élargir élastiquement pour l'insertion latérale du fil de faîte (18).

6. Elément de connexion selon l'une quelconque des revendications 1 à 5, **caractérisé en ce que** la partie supérieure (28) est apte à s'assembler par emboîtement avec la structure d'appui (32) de la partie inférieure (26) dans la région d'une face de serrage (38) pour la structure plate (20).

7. Elément de connexion selon l'une quelconque des revendications 1 à 6, **caractérisé en ce que** la partie supérieure (28) et la partie inférieure (26) peuvent être assemblées au moyen d'une vis par l'intermédiaire d'au moins un canal de vis commun (40, 40') s'étendant latéralement au guidage de fil (30) et traversant la structure plate (20) à l'état monté.

8. Elément de connexion selon la revendication 7, **caractérisé en ce que** le canal de vis (40, 40') présente un tenon enfichable (42) saillant sur la partie supérieure (28) ou la partie inférieure (26) et apte à s'engager à travers la structure plate (20).

9. Elément de connexion selon l'une quelconque des revendications 1 à 8, **caractérisé en ce que** la partie inférieure (26) est pourvue de part et d'autre du guidage de fil (30) d'un creux en forme de rainure (44) ou d'une surélévation en forme de nervure pour un engagement par complémentarité de forme de la partie supérieure (28).

10. Elément de connexion selon l'une quelconque des revendications 1 à 9, **caractérisé en ce que** la partie supérieure et la partie inférieure (26, 28) sont réalisées sous la forme de pièces moulées, en particulier de pièces moulées par injection, et sont stabilisées par une structure de nervures moulées.

11. Elément de connexion selon l'une quelconque des revendications 1 à 10, **caractérisé par** une bande de suspension perforée (50) de préférence en forme de grille pour le serrage de la structure plate (20), dans lequel la bande de suspension (50) peut être suspendue de façon détachable au moins par une extrémité (52) à la partie supérieure (28).

12. Toiture de protection contre les intempéries pour des cultures de plantes (12) comportant une structure plate en forme de toit (20) formée de bandes de toile ou de filet, une construction porteuse (14) pour la structure plate (20) et une pluralité d'éléments de connexion (24) disposés de façon répartie sur des fils de faîte (18) de la construction porteuse (14), qui sont composés respectivement d'une partie inférieure (26) apte à s'accrocher sur un segment de fil et présentant un guidage de fil (30) traversé axialement par le fil de faîte (18), et d'une partie supérieure (28) apte à se poser sur la partie inférieure (26) avec interposition par serrage de la structure plate flexible (20) formée en particulier de bandes de toile ou de filet, **caractérisée en ce que** la partie inférieure (26) présente une structure d'appui (32) saillante en forme d'ailes de part et d'autre du guidage de fil (30) pour un soutien à plat de la structure plate (20).
